# EUROPÄISCHE PATENTSCHRIFT

(11) **EP 2 300 959 B1**
(45) Veröffentlichungstag und Bekanntmachung des Hinweises auf die Patenterteilung: **08.08.2012**
(21) Anmeldenummer: 09768925.1
(22) Anmeldetag: 16.06.2009
(51) Int. Cl.: G06K 7/00, G06K 19/077

(54) **KONTAKTIEREINHEIT, INSBESONDERE NACH PCMCIA-EXPRESSCARD-NORM**
CONTACTING UNIT, PARTICULARLY ACCORDING TO THE PCMCIA EXPRESS CARD STANDARD
UNITÉ DE CONTACTAGE, EN PARTICULIER SELON LA NORME PCMCIA-EXPRESSCARD

(30) Priorität: 18.06.2008 DE 202008008192 U
(43) Veröffentlichungstag der Anmeldung: 30.03.2011
(73) Patentinhaber: STOCKO Contact GmbH & Co. KG, 42327 Wuppertal (DE)
(72) Erfinder: KLATT, Dieter, 42489 Wülfrath (DE)
(74) Vertreter: Stenger, Watzke & Ring
(86) Internationale Anmeldenummer: PCT/EP2009/004320
(87) Internationale Veröffentlichungsnummer: WO 2009/156076

(56) Entgegenhaltungen:
- DE-A1- 19 922 063
- DE-U1- 20 210 362
- DE-U1- 20 218 325
- DE-U1-202004 007 011

## Beschreibung

Die Erfindung betrifft eine Kontaktiereinheit, insbesondere nach PCMCIA-ExpressCard-Norm, für ein kartenförmiges Trägerelement elektronischer Baugruppen, insbesondere für eine Chipcard nach ISO 7816, mit einem Gehäuse, welche steckkartenförmig ausgebildet ist und eine Basisplatte sowie eine dazu deckungsgleiche Abdeckplatte aufweist, wobei zwischen der Basisplatte und der Abdeckplatte ein an einer Stirnseite des Gehäuses mündender schlitzartiger Einschubkanal ausgebildet ist, in welchen das kartenförmige Trägerelement, insbesondere die Chipkarte nach ISO 7816, einschiebbar ist, wobei an der dem Einschubkanal gegenüberliegenden Stirnseite des Gehäuses ein Anschlussfeld, insbesondere nach PCMCIA-ExpressCard-Norm ausgebildet ist, und mit einer parallel zum Einschubkanal im Gehäuse angeordneten Leiterplatte, die elektrisch mit dem Anschlussfeld verbunden ist und an einer ihrer Oberflächen ein Kontaktfeld für eine Kontaktierung mit einem vom kartenförmigen Trägerelement bereitgestellten Kontaktblock, insbesondere Chipkontaktblock, aufweist.

Kontaktiereinheiten für kartenförmige Trägerelemente im Allgemeinen sowie Kontaktiereinheiten nach PCMCIA-ExpressCard-Norm im Speziellen sind in vielerlei Ausgestaltungsformen aus dem Stand der Technik bekannt. Eine gattungsgemäße Kontaktiereinheit ist beispielsweise mit der DE 20 2004 000 179 U1 beschrieben.

DE 2021036241 offenbart die Mekmale des oberbegriffes von Auspruch 1.

Obgleich sich die aus dem Stand der Technik vorbekannten Kontaktiereinheiten im alltäglichen Praxiseinsatz bewährt haben, besteht Verbesserungsbedarf, insbesondere hinsichtlich eines erweiterten Anwendungsspektrums.

Es ist deshalb die **Aufgabe** der Erfindung, eine gegenüber dem Stand der Technik weiterentwickelte Kontaktiereinheit vorzuschlagen, die insbesondere ein erweitertes Anwendungsspektrum ermöglicht.

Die erfindung ist legenstand von Anspruch 1 und von Anspruch 5.

Zur **Lösung** der Aufgabe wird mit der Erfindung eine Kontaktiereinheit vorgeschlagen, die sich dadurch auszeichnet, dass die Leiterplatte an einer ihrer Oberflächen ein zweites Kontaktfeld für eine Kontaktierung mit einer Memory Card aufweist.

Die Kontaktiereinheit nach der Erfindung dient in an sich bekannter Weise der Kontaktierung eines von einem Trägerelement bereitgestellten Kontaktblocks, zu welchem Zweck die Kontaktiereinheit über ein entsprechend ausgebildetes Kontaktfeld verfügt. Dieses tritt nach einem bestimmungsgemäßen Einschub des Trägerelements in die Kontaktiereinheit mit dem Kontaktblock in elektrische Verbindung. Die Kontaktiereinheit ist erfindungsgemäß mit einem weiteren, das heißt zweiten Kontaktfeld ausgerüstet. Dieses Kontaktfeld dient der Kontaktierung mit einer Memory Card. Die Kontaktiereinheit ermöglicht es damit, herkömmliche Trägerelemente, wie zum Beispiel Standard-Chipkarten einerseits sowie Memory Cards andererseits auslesen zu können. Die Kontaktiereinheit nach der Erfindung stellt insofern eine kombinierte Lese- und/oder Schreibeinheit dar.

Gattungsgemäße Kontaktiereinheiten nach dem Stand der Technik sind ausschließlich dazu ausgerüstet, herkömmliche Trägerelemente beispielsweise in Form von Chipkarten auslesen zu können. Weitergehende Auslese- und/oder Schreibmöglichkeiten bieten derlei Kontaktiereinheiten nicht. Die erfindungsgemäße Kontaktiereinheit schafft hier Abhilfe, da diese Kontaktfelder zur Verfügung stellt, die mit einem ersten Kontaktfeld das Auslesen beispielsweise eines Kontaktblocks in Form eines Chips einer herkömmlichen Chipkarte sowie mit einem zweiten Kontaktfeld die Kontaktierung mit einer von dem Trägerelement getragenen Memory Card ermöglicht. Somit ergibt sich für die erfindungsgemäße Kontaktiereinheit gegenüber den aus dem Stand der Technik bekannten Kontaktiereinheiten in vorteilhafter Weise ein erweitertes Anwendungsspektrum.

Gemäß einem weiteren Merkmal der Erfindung ist vorgesehen, dass die Kontaktfelder, das heißt sowohl das Kontaktfeld für eine Kontaktierung mit einem vom kartenförmigen Trägerelement bereitgestellten Kontaktblock als auch das Kontaktfeld für eine Kontaktierung mit einer Memory Card auf derselben Oberfläche der Leiterplatte vorgesehen sind. Diese Ausgestaltung erbringt in vorteilhafter Weise einen einfachen Aufbau der erfindungsgemäßen Kontaktiereinheit und ermöglicht zudem eine einfache und sichere Handhabung derselben.

Gemäß einem weiteren Merkmal der Erfindung ist vorgesehen, dass die Kontaktfelder in Einschubrichtung und/oder quer hierzu versetzt zueinander ausgebildet sind. Diese Ausgestaltung dient als eine Art Codierung, so dass auch im Falle einer ungewollt unsachgemäßen Handhabung sichergestellt ist, dass nicht das erste Kontaktfeld, das heißt das Kontaktfeld für eine Kontaktierung mit einem vom kartenförmigen Trägerelement bereitgestellten Kontaktblock mit der Memory Card bzw. das zweite Kontaktfeld, das heißt das Kontaktfeld für eine Kontaktierung mit einer Memory Card mit dem vom kartenförmigen Trägerelement bereitgestellten Kontaktblock in Kontakt gebracht wird.

Das zweite Kontaktfeld wird gemäß einem weiteren Merkmal der Erfindung bevorzugterweise durch einen Memory Card-Reader gebildet. Hierbei handelt es sich um ein aus dem Stand der Technik bekanntes Standardbauteil, welches in vorteilhafter Weise einfach zu handhaben und in die Leiterplatte nach der erfindungsgemäßen Kontaktiereinheit zu integrieren ist.

Mit der Erfindung wird des Weiteren ein Trägerelement, insbesondere eine Chipkarte nach ISO 7816 vorgeschlagen, und zwar insbesondere ein solches zur Verwendung mit einer Kontaktiereinheit nach der Erfindung. Das Trägerelement verfügt in an sich bekannter Weise über einen Kontaktblock, der der Kontaktierung mit einem von der Kontaktiereinheit bereitgestellten Kontaktfeld dient. Das Trägerelement ist erfindungsgemäß mit einer Memory Card-Aufnahme ausgerüstet.

Die erfindungsgemäße Ausgestaltung schafft in vorteilhafter Weise die Möglichkeit, ein Trägerelement mit einer Memory Card auszurüsten. Im besonderen Ausgestaltungsfall des Trägerelements als Chipkarte ergibt sich so eine Kombination aus Standard-Chipcard einerseits und Memory Card andererseits.

Die Memory Card-Aufnahme ist bevorzugterweise als Ausnehmung, beispielsweise in Form eines Durchbruches ausgebildet, in welche eine Memory Card einsetzbar ist. Bevorzugterweise ist in diesem Zusammenhang vorgesehen, dass die Ausnehmung korrespondierend zur Memory Card ausgebildet ist.

Die Ausgestaltung der Memory Card-Aufnahme als Ausnehmung ist in vorteilhafter Weise in einfacher Weise und darüber hinaus kostengünstig herstellbar. Im einfachsten Fall wird das Trägerelement zum Beispiel mittels eines einfachen Ausstanzvorganges mit einer solchen als Memory Card-Aufnahme dienenden Ausnehmung in Form eines Durchbruches versehen.

Die Ausgestaltung der Memory Card-Aufnahme als Ausnehmung hat darüber hinaus den Vorteil, dass in einfacher Weise eine Nachrüstung möglich ist, so dass dem Verwender des erfindungsgemäßen Trägerelements die Möglichkeit der Nachrüstung in vorteilhafter Weise offensteht.

Es kann gemäß einer ersten Alternative vorgesehen sein, dass der Trägerelement-Hersteller das Trägerelement mit einer Memory Card ausrüstet, das heißt eine Memory Card in die dafür vorgesehene Aufnahme des Trägerelements einbringt und unverlierbar mit dem Trägerelement verbindet. Seitens des Trägerelement-Herstellers wird also ein Trägerelement, beispielsweise eine Chipkarte mit integrierter Memory Card bereitgestellt.

Es kann gemäß einer zweiten Alternative vorgesehen sein, dass herstellerseitig das Trägerelement lediglich mit einer Memory Card-Aufnahme beispielsweise in Form einer Ausstanzung ausgerüstet wird. Verwenderseitig kann dann im Bedarfsfall eine Memory Card in die dafür vorgesehene und vom Hersteller ausgebildete Memory Card-Aufnahme eingebracht werden.

Es kann gemäß einer dritten Alternative auch vorgesehen sein, dass der Verwender durch eine nachträgliche Ausstanzung oder Freimachung die Memory Card-Aufnahme selbst ausbildet. Um diese Möglichkeit bereitzustellen, kann beispielsweise eine Markierung auf dem Trägerelement vorgesehen sein, die es dem Anwender ermöglicht, die zur Ausbildung der Memory Card-Aufnahme vorzunehmende Ausstanzung positionsgenau vorzunehmen.

Die Grundfunktionen, Abmessungen und Eigenschaften des Trägerelements bleiben gemäß aller vorbeschriebenen Ausgestaltungsaltemativen ansonsten unverändert.

Es kann insbesondere mit Blick auf eine nachträgliche Ausstanzung zur Ausbildung einer Memory Card-Aufnahme entweder durch den Hersteller oder durch den Verwender vorgesehen sein, so dass das Trägerelement rückseitig eine Fixierungsschicht beispielsweise in Form einer Folie, vorzugsweise einer selbstklebenden Folie trägt. Diese auch als Laminat zu bezeichnende Folie ermöglicht in vorteilhafter Weise eine Positionierung einer in die Memory Card-Aufnahme eingebrachten Memory Card und sichert diese darüber hinaus gegen Herausfallen. Je nach Applikation kann die Memory Card im Übrigen in die Memory Card-Aufnahme eingeklebt oder auswechselbar eingebracht sein.

Bevorzugterweise kann seitens eines späteren Verwenders eine Ausstanzung zur Ausbildung einer Memory Card-Aufnahme vorgenommen werden, und zwar mittels eines entsprechenden Hilfswerkzeuges, welches in Abstimmung auf eine standardgemäße Chipkarte Anschläge bereitstellt, so dass bei einer bestimmungsgemäßen Verwendung des Hilfswerkzeuges eine positionsgenaue Ausbildung der Memory Card-Aufnahme sichergestellt ist. Durch nachträgliches Aufbringen beispielsweise eines Klebestreifens in Form einer Folie auf der Unterseite des Trägerelements lässt sich die Memory Card im Aufnahmebereich befestigen und lagesicher fixieren.

Mit der erfindungsgemäßen Ausgestaltung können Security- und Memoryfunktionen mit einem externen Modul kombiniert werden. Die Memory-Speichermedien beispielsweise in der Flash-Technologie erreichen zum Beispiel Speichergrößen von 16 Gigabyte bis 32 Gigabyte in Mikrobauform und sind wie eine Festplatte wieder beschreibbar.

Durch die Kombination einer herkömmlichen Chipkarte und einer Memory Card ergeben sich insbesondere mit Blick auf die Verwendung im Bereich der Datenverschlüsselung erhebliche Vorteile, da die Datenverschlüsselung insgesamt sicherer gehalten werden kann.

So kann die Datenverschlüsselung mittels entsprechender Elektronik und Treiber komplett in den externen Chipkartenlesegeräten für zum Beispiel PCMCIA und/oder Expresscard erfolgen und auf der Memory Card sicher gespeichert werden. Hiermit werden Sicherheitslücken die im PC- oder Notebook-Betriebssystem vorhanden sein können, ausgeschlossen, da der Datenverkehr ausschließlich auf dem externen Chipkartenlesegerät erfolgt. Die verschlüsselten Daten auf der Memory Card können im Übrigen sicher transportiert werden, da die gesicherten Daten erst in Kombination mit der Chipkarte beispielsweise in Form einer Kryptokarte und/oder in Kombination mit einer gesicherten Netzwerkfreischaltung beispielsweise über Passwort und generiertem Schlüssel wieder zugänglich gemacht werden können. Der Schlüssel wird dabei für die Freischaltung bevorzugterweise permanent neu generiert.

Die in vorbeschriebener Weise verschlüsselten Daten können kopiert und archiviert und auch innerhalb eines Netzwerkes ohne Sicherheitsprobleme transportiert werden. So lassen sich zum Beispiel Datenbanken in sehr einfacher, gleichzeitig aber auch sicherer Weise schützen, da die Daten mobil und damit extern hinterlegt sind.

Ein besonderes Anwendungsbeispiel stellen digitale TV und verschlüsselte Pay TV Angebote dar. Diese können beispielsweise mittels eines genormten CI-Moduls mit entsprechender Berechtigung auf die Memory Card kopiert werden. Kopierfähige Daten können beispielsweise Musik- und Filmdaten sein. Diese Daten können dann je nach Freigabe durch den Anbieter sowohl mit oder ohne Kopierschutz mittels der Chipkarte verschlüsselt und nur vom autorisierten Verwender entschlüsselt und damit nutzbar gemacht werden.

Auch Systemupdates können unter Verwendung einer erfindungsgemäßen Kontaktiereinheit in Kombination mit einem erfindungsgemäßen Trägerelement in einfacher Weise vorgenommen werden, da die Systemdaten zum Beispiel aus dem Internet verschlüsselt auf der Memory Card des Trägerelements gespeichert werden. Die Freischaltung der Systemdaten erfolgt dann systemgebunden mittels der beispielsweise in Form einer Kryptokarte vorliegenden Chipkarte, das heißt dem Trägerelement.

Es lassen sich darüber hinaus auch Daten, die beispielsweise mittels eines Rechners, einer Digitalkamera, einer Videokamera oder dergleichen auf der Memory Card des Trägerelements gespeichert wurden, mittels dem Multicard-System nach der Erfindung auf einem TV-Gerät mit Cl-Schacht oder über eine Set Top Box mit Cl-Schacht wiedergeben. Das erfindungsgemäße Trägerelement ist auch insofern multifunktional einsetzbar.

Weitere Merkmale und Vorteile der Erfindung ergeben sich aus der nachfolgenden Beschreibung anhand der Fign. Dabei zeigen:
- Fig. 1: in schematisch-perspektivischer Ansicht eine erfindungsgemäße Kontaktiereinheit mit einem zum Teil aufgenommenen Trägerelement nach der Erfindung;
- Fig. 2: in einer schematisch-perspektivischen Darstellung eine erfindungsgemäße Kontaktiereinheit mit einem Trägerelement nach der Erfindung;
- Fig. 3: in schematisch-perspektivischer Darstellung ein Trägerelement nach der Erfindung und
- Fig. 4: in schematisch-perspektivischer Explosionsdarstellung ein Trägerelement nach Fig. 3.

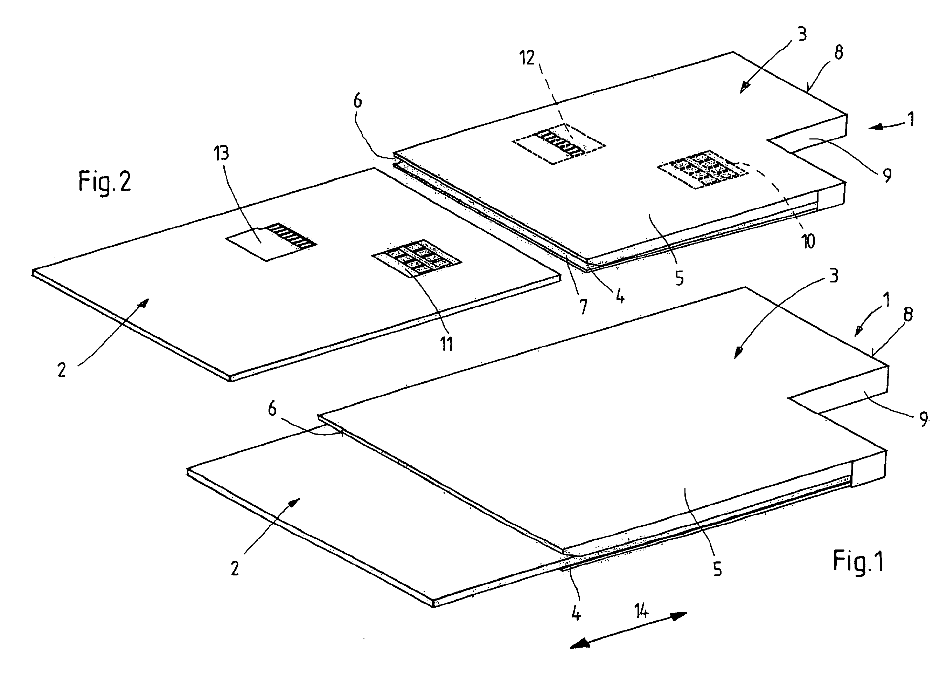

Das in Fig. 1 dargestellte Ausführungsbeispiel der Erfindung zeigt eine als Chipkartenleser ausgebildete Kontaktiereinheit 1, die beispielsweise dazu vorgesehen ist, über eine normgemäße PCMCIA-ExpressCard-Schnittstelle beispielsweise mit einem PC oder einem Notebook kombiniert zu werden.

Die Kontaktiereinheit 1 verfügt über ein Gehäuse 3, welches eine Basisplatte 4 und eine damit deckungsgleiche Abdeckplatte 5 aufweist. Die Kontaktiereinheit 1 verfügt darüber hinaus über ein PCMCIA-ExpressCard-Anschlussfeld 9 in Form einer Steckverbinderleiste mit Anschlusspolen an der in Einschubrichtung in den entsprechenden Schacht beispielsweise eines Notebooks vorderen, mit Bezug auf die Bildebene nach Fig. 1 rechten Stirnseite 8. Die mit Bezug auf die Zeichnungsebene nach Fig. 1 linke, das heißt erste Stirnseite 6 der Kontaktiereinheit 1 stellt einen Einschubkanal 7 für die Einführung eines Trägerelements 2 insbesondere in Form einer Chipkarte nach ISO 7816 zur Verfügung.

Im Gehäuse 3 ist eine in den Fign. nicht näher dargestellte Leiterplatte angeordnet, und zwar zwischen der Basisplatte 4 einerseits und der Abdeckplatte 5 andererseits. Die Leiterplatte ist elektrisch mit dem Anschlussfeld 9 verbunden und weist an ihrer mit Bezug auf die Zeichnungsebene nach Fig. 1 oberen, das heißt der Abdeckplatte 5 zugewandten Oberfläche ein Kontaktfeld 10 auf, welches schematisch der Darstellung nach Fig. 2 entnommen werden kann.

Das von der Leiterplatte 10 bereitgestellte Kontaktfeld 10 dient der Kontaktierung mit einem vom kartenförmigen Trägerelement 2 bereitgestellten Kontaktblock 11. Dieser Sachzusammenhang ergibt sich insbesondere aus einer Zusammenschau der Fign. 1 und 2, wobei Fig. 1 ein zumindest teilweise in Einschubrichtung 14 in die Kontaktiereinheit 1 eingebrachtes Trägerelement 2 in Form einer Chipkarte zeigt.

Die Leiterplatte der Kontaktiereinheit 1 verfügt erfindungsgemäß über ein zweites Kontaktfeld 12, wie sich insbesondere aus der Darstellung nach Fig. 2 ergibt. Dieses zweite Kontaktfeld 12 dient der Kontaktierung einer vom Trägerelement 2 getragenen Memory Card 13.

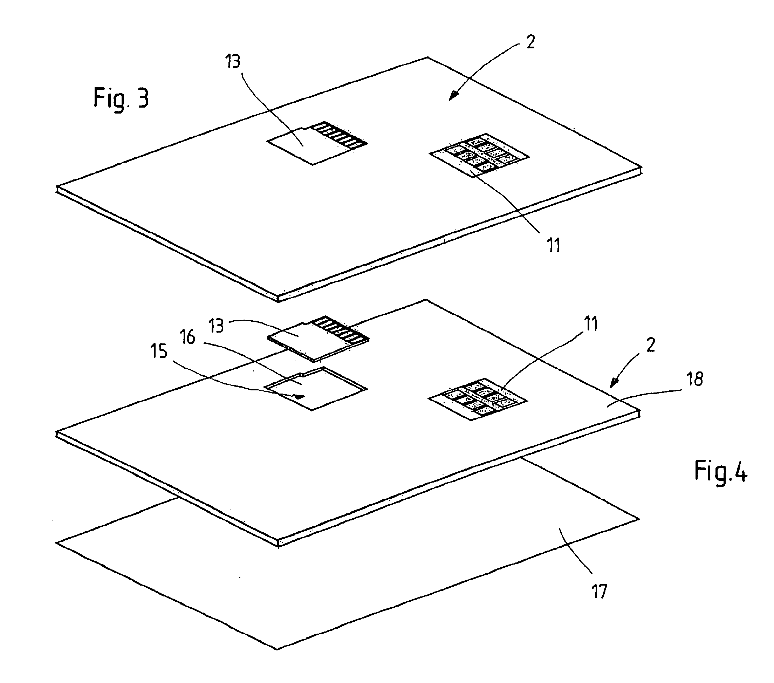

Wie insbesondere eine Zusammenschau der Fign. 3 und 4 zeigt, stellt das erfindungsgemäße Trägerelement 2 in herkömmlicher Weise einen Kontaktblock 11 sowie in erfindungsgemäßer Weise in Kombination hiermit eine Memory Card 13 bereit. Der Kontaktblock 11 kann mittels des von der Kontaktiereinheit 1 bereitgestellten Kontaktfeldes 10 ausgelesen werden. Die Kontaktiereinheit 1 stellt darüber hinaus ein Kontaktfeld 12 vorzugsweise in Form eines Memory Card-Readers zur Verfügung, welches der Kontaktierung der Memory Card 13 zwecks Lesen und/oder Beschreiben derselben dient.

Zur Anordnung der Memory Card 13 am vorzugsweise als Chipkarte ausgebildeten Trägerelement 2 dient eine Memory Card-Aufnahme 15, die bevorzugterweise als Ausnehmung 16 in Form einer Ausstanzung ausgebildet ist. Die Memory Card 13 kann in die Ausnehmung 16 beispielsweise eingeklebt sein.

Gemäß einer besonderen Ausgestaltung der Erfindung ist das Trägerelement 2 durch eine Trägerplatte 18 gebildet, die rückseitig mit einer vorzugsweise selbstklebend ausgebildeten Folie 17 bestückt ist. Diese Folie 17 dient der Positionierung und Lagefixierung einer in die Ausnehmung 16 eingebrachten Memory Card 13.

Die Folie 17 kann in ihren Abmessungen korrespondierend zur Trägerplatt 18 ausgebildet sein, wie in Fig. 4 dargestellt. Zur Lagefixierung der Memory Card 13 reicht aber auch ein in Einschubrichtung 14 ausgerichteter Längsstreifen, der die als Memory Card-Aufnahme 15 dienende Ausnehmung 16 unterseitig abdeckt und so die Memory Card 13 vor einem ungewollten Verlieren sichert.

### Bezugszeichenliste

- 1: Kontaktiereinheit
- 2: Trägerelement
- 3: Gehäuse
- 4: Basisplatte
- 5: Abdeckplatte
- 6: (erste) Stirnseite
- 7: Einschubkanal
- 8: (zweite) Stirnseite
- 9: Anschlussfeld
- 10: Kontaktfeld
- 11: Kontaktblock
- 12: Kontaktfeld
- 13: Memory Card
- 14: Einschubrichtung
- 15: Memory Card-Aufnahme
- 16: Ausnehmung
- 17: Folie
- 18: Trägerplatte

## Patentansprüche

1. Kontaktiereinheit (1), insbesondere nach PCMCIA-ExpressCard-Norm, für eine Chipcard nach ISO 7816, mit einem Gehäuse (3), welches steckkartenfömig ausgebildet ist und eine Basisplatte (4) sowie eine dazu deckungsgleiche Abdeckplatte (5) aufweist, wobei zwischen der Basisplatte (4) und der Abdeckplatte (5) ein an einer Stirnseite (6) des Gehäuses (3) mündender schlitzartiger Einschubkanal (7) ausgebildet ist, in welchen die Chipcard nach ISO 7816 einschiebbar ist, wobei an der dem Einschubkanal (7) gegenüberliegenden Stirnseite (8) des Gehäuses (3) ein Anschlussfeld (9), insbesondere nach PCMCIA-ExpressCard-Norm, ausgebildet ist, und mit einer parallel zum Einschubkanal (7) im Gehäuse (3) angeordneten Leiterplatte, die elektrisch mit dem Anschlussfeld (9) verbunden ist und an einer ihrer Oberflächen ein Kontaktfeld (10) für eine Kontaktierung mit einem von der Chipcard nach ISO 7816 bereitgestellten Kontaktblock (11) nach ISO 7816, insbesondere Chipkontaktblock aufweist,
**dadurch gekennzeichnet**
**dass** die Leiterplatte an einer ihrer Oberflächen ein zweites Kontaktfeld (12) für eine Kontaktierung mit einer von der Chipkarte in einer Ausnehmung (16) getragenen, nicht ISO 7816-konformen Memory Card (13) aufweist.

2. Kontaktiereinheit nach Anspruch 1, **dadurch gekennzeichnet, dass** die Kontaktfelder (10, 12) auf derselben Oberfläche der Leiterplatte vorgesehen sind.

3. Kontaktiereinheit nach Anspruch 1 oder 2, **dadurch gekennzeichnet, dass** die Kontaktfelder (10, 12) in Einschubrichtung (14) und/oder quer hierzu versetzt zueinander ausgebildet sind.

4. Kontaktiereinheit nach einem der vorhergehenden Ansprüche, **dadurch gekennzeichnet, dass** das zweite Kontaktfeld (12) durch einen Memory Card Reader gebildet ist.

5. Chipcard nach ISO 7816 zur Verwendung mit einer Kontaktiereinheit (1) nach einem der vorhergehenden Ansprüche 1 bis 4, mit einem Kontaktblock (11) nach ISO 7816, insbesondere einem Chipkontaktblock, zur Kontaktierung mit einem von der Kontaktiereinheit (1) bereitgestellten Kontaktfeld (10), **gekennzeichnet durch** eine in einer Ausnehmung (16) eingesetzte, nicht ISO 7816-konforme Memory Card (13).

6. Chipcard nach Anspruch 5, **dadurch gekennzeichnet, dass** die Memory Card-Aufnahme (15) eine Ausnehmung (16) ist, in welche eine Memory Card (13) einsetzbar ist.

7. Chipcard nach Anspruch 5 oder 6, **dadurch gekennzeichnet, dass** die Ausnehmung (16) korrespondierend zur Außenkontur der Memory Card (13) ausgebildet ist.

8. Chipcard nach Anspruch 5, 6 oder 7, **gekennzeichnet durch** eine Fixierungsschicht.

9. Chipcard nach Anspruch 8, **dadurch gekennzeichnet, dass** die Fixierungsschicht rückseitig angeordnet ist.

10. Chipcard nach Anspruch 8 oder 9, **dadurch gekennzeichnet, dass** die Fixierungsschicht eine vorzugsweise selbstklebende Folie (17) ist.

11. Chipcard nach Anspruch 10, **dadurch gekennzeichnet, dass** die Folie (17) in ihren Abmessungen der Chipcard entspricht.

## Claims

1. A contacting unit (1), in particular in accordance with the PCMCIA-ExpressCard standard, for a chip card according to standard ISO 7816, with a housing (3) which is constructed in the shape of a plug-in card and has a base plate (4), as well as a cover plate (5) congruent thereto, wherein a slot-like insertion channel (7), into which the chip card according to ISO 7816 can be pushed, opening at an end face (6) of the housing (3) is constructed between the base plate (4) and the cover plate (5), wherein a connector panel (9) is constructed, particularly in accordance with the PCMCIA-ExpressCard standard, on the end face (8) of the housing (3) opposite the insertion channel (7), and with a printed circuit board arranged parallel to the insertion channel (7) in the housing (3), which printed circuit board is electrically connected to the connector panel (9) and has a contact panel (10) on one of the surfaces thereof for contacting with a contact unit (11) according to ISO 7816, particularly a chip contact unit, provided by the chip card according to ISO 7816,
**characterised**
**in that** the printed circuit board has a second contact panel (12) on one of the surfaces thereof for contacting with a memory card (13) not conform to ISO 7816 and carried by the chip card in a recess (16).

2. The contacting unit according to Claim 1, **characterised in that** the contact panels (10, 12) are provided on the same surface of the printed circuit board.

3. The contacting unit according to Claim 1 or 2, **characterised in that** the contact panels (10, 12) are constructed offset to one another in the insertion direction (14) and/or transversely thereto.

4. The contacting unit according to one of the preceding claims, **characterised in that** the second contact panel (12) is formed by a memory card reader.

5. A chip card according to ISO 7816 for use with a contacting unit (1) according to one of the preceding Claims 1 to 4, with a contact unit (11) according to ISO 7816, particularly a chip contact block, for contacting with a contact panel (10) provided by the contacting unit (1), **characterised by** a memory card (13) inserted in a recess (16) and not conform to ISO 7816.

6. The chip card according to Claim 5, **characterised in that** the memory card receptacle (15) is a recess (16), in which a memory card (13) can be inserted.

7. The chip card according to Claim 5 or 6, **characterised in that** the recess (16) is constructed corresponding to the outer contour of the memory card (13).

8. The chip card according to Claim 5, 6 or 7, **characterised by** a fixing layer.

9. The chip card according to Claim 8, **characterised in that** the fixing layer is arranged on the rear side.

10. The chip card according to Claim 8 or 9, **characterised in that** the fixing layer is a preferably self-adhesive film (17).

11. The chip card 10, **characterised in that** the film (17) corresponds to the chip card in terms of its dimensions.

## Revendications

1. Unité de mise en contact (1), en particulier selon la norme PCMCIA-ExpressCard, pour une carte à puce selon ISO 7816, comprenant un boîtier (3), qui est conçu en forme de carte enfichable et présente une plaque de base (4) ainsi qu'une plaque de recouvrement (5) coïncidant avec cette plaque, un canal d'introduction (7) en forme de fente, débouchant sur un côté avant (6) du boîtier (3) étant conçu entre la plaque de base (4) et la plaque de recouvrement (5), canal dans lequel la carte à puce selon ISO 7816 peut être introduite, une zone de raccordement (9), en particulier selon la norme PCMCIA-ExpressCard, étant conçue sur le côté avant (8), opposé au canal d'introduction (7), du boîtier (3), et comprenant une carte imprimée disposée parallèlement au canal d'introduction (7) dans le boîtier (3), laquelle plaque est reliée électriquement à la zone de raccordement (9) et présente sur l'une de ses surfaces une zone de contact (10) pour une mise en contact avec un bloc de contact (11) selon ISO 7816 fourni par la carte à puce selon ISO 7816, en particulier un bloc de contact à puce,
**caractérisée**
**en ce que** la carte imprimée présente sur l'une de ses surfaces une seconde zone de contact (12) pour une mise en contact avec une carte mémoire (13) non conforme à ISO 7816, portée par la carte à puce dans un évidement (16).

2. Unité de mise en contact selon la revendication 1, **caractérisée en ce que** les zones de contact (10, 12) sont prévues sur la même surface de la carte imprimée.

3. Unité de mise en contact selon la revendication 1 ou 2, **caractérisée en ce que** les zones de contact (10, 12) sont conçues dans le sens d'introduction (14) et/ou décalées les unes par rapport aux autres transversalement à cette direction.

4. Unité de mise en contact selon l'une des revendications précédentes, **caractérisée en ce que** la seconde zone de contact (12) est formée par un lecteur de carte mémoire.

5. Carte à puce selon ISO 7816 destinée à être utilisée avec une unité de mise en contact (1) selon l'une des revendications précédentes 1 à 4, comprenant un bloc de contact (11) selon ISO 7816, en particulier un bloc de contact à puce, pour la mise en contact avec une zone de contact (10) fournie par l'unité de mise en contact (1), **caractérisée par** une carte mémoire (13) insérée dans un évidement (16) et non conforme à ISO 7816.

6. Carte à puce selon la revendication 5, **caractérisée en ce que** le logement de la carte mémoire (15) est un évidement (16) dans lequel une carte mémoire (13) peut être insérée.

7. Carte à puce selon la revendication 5 ou 6, **caractérisée en ce que** l'évidement (16) est conçu de façon à correspondre au contour extérieur de la carte mémoire (13).

8. Carte à puce selon la revendication 5, 6 ou 7, **caractérisée par** une couche de fixation.

9. Carte à puce selon la revendication 8, **caractérisée en ce que** la couche de fixation est disposée sur la face arrière.

10. Carte à puce selon la revendication 8 ou 9, **caractérisée en ce que** la couche de fixation est un film (17) de préférence autocollant.

11. Carte à puce selon la revendication 10, **caractérisée en ce que** le film (17) correspond dans ses dimensions à la carte à puce.
